(19) Europäisches Patentamt
European Patent Office
Office européen des brevets

(11) **EP 3 830 814 B1**

(12) **FASCICULE DE BREVET EUROPEEN**

(45) Date de publication et mention
de la délivrance du brevet:
**27.07.2022 Bulletin 2022/30**

(21) Numéro de dépôt: **19758624.1**

(22) Date de dépôt: **31.07.2019**

(51) Classification Internationale des Brevets (IPC):
**G09C 1/00** *(2006.01)* **G06F 7/76** *(2006.01)*

(52) Classification Coopérative des Brevets (CPC):
**G09C 1/00; G06F 7/582; G06F 21/602; G06F 21/72**

(86) Numéro de dépôt international:
**PCT/EP2019/070569**

(87) Numéro de publication internationale:
**WO 2020/025649 (06.02.2020 Gazette 2020/06)**

(54) **GÉNÉRATEUR D'UNE PERMUTATION PSEUDO-ALÉATOIRE**

PSEUDOZUFALLSMUTATIONSGENERATOR

PSEUDO-RANDOM PERMUTATION GENERATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.08.2018 FR 1857308**
**05.09.2018 FR 1857958**

(43) Date de publication de la demande:
**09.06.2021 Bulletin 2021/23**

(73) Titulaire: **Commissariat à l'Energie Atomique et
aux Energies
Alternatives
75015 Paris (FR)**

(72) Inventeurs:
• **BENJILALI, Wissam
38054 GRENOBLE CEDEX 9 (FR)**
• **GUICQUERO, William
38054 GRENOBLE CEDEX 9 (FR)**

(74) Mandataire: **Cabinet Beaumont
4, Place Robert Schuman
B.P. 1529
38025 Grenoble Cedex 1 (FR)**

(56) Documents cités:
**US-A1- 2006 120 619**

• **M. FRANÇOIS ET AL: "Pseudo-random number
generator based on mixing of three chaotic
maps", COMMUNICATIONS IN NONLINEAR
SCIENCE AND NUMERICAL SIMULATION, vol.
19, no. 4, 1 avril 2014 (2014-04-01), pages 887-895,
XP55635262, AMSTERDAM, NL ISSN: 1007-5704,
DOI: 10.1016/j.cnsns.2013.08.032**
• **MANICCAM S S ET AL: "Image and video
encryption using SCAN patterns", PATTERN
RECOGNITION, ELSEVIER, GB, vol. 37, no. 4, 1
avril 2004 (2004-04-01), pages 725-737,
XP004491487, ISSN: 0031-3203, DOI:
10.1016/J.PATCOG.2003.08.011**
• **Mohammad Ali Bani Younes ET AL: "An Image
Encryption Approach Using a Combination of
Permutation Technique Followed by
Encryption", IJCSNS International Journal of
Computer Science and Network Security, Vol. 8,
1 avril 2008 (2008-04-01), pages 191-197,
XP55635267, Extrait de l'Internet:
URL:https://pdfs.semanticscholar.org/2dfd/
52d263fd2e222a0eed1d66519ab9da40d4ab.pdf
[extrait le 2019-10-23]**

**EP 3 830 814 B1**

Il est rappelé que: Dans un délai de neuf mois à compter de la publication de la mention de la délivrance du brevet
européen au Bulletin européen des brevets, toute personne peut faire opposition à ce brevet auprès de l'Office européen
des brevets, conformément au règlement d'exécution. L'opposition n'est réputée formée qu'après le paiement de la taxe
d'opposition. (Art. 99(1) Convention sur le brevet européen).

**Description**

Domaine technique

La présente description concerne de façon générale les circuits et systèmes électroniques et, plus particulièrement, les circuits utilisant des permutations pseudo-aléatoires de données qu'ils manipulent.
La présente description concerne, plus précisément, un procédé et un circuit de génération de permutations pseudo-aléatoires.

Technique antérieure

Les permutations pseudo-aléatoires sont notamment utilisées en cryptographie, dans les transmissions et dans l'imagerie, et les systèmes existants sont complexes et encombrant pour des systèmes ayant de fortes contraintes matérielles.

M. François et al: "Pseudo-random number generator based on mixing of three chaotic maps", expose un générateur de nombres aléatoires utilisant une fonction chaotique standard.

S. Maniccam et al: "Image and video encryption using SCAN patterns" expose un procédé de chiffrement et compression d'images et de vidéos à l'aide de la méthodologie SCAN.

La demande de brevet US 2006/120619 expose l'acquisition des pixels d'une image, suivie de leur permutation.

M. Younes et al: "An Image Encryption Approach Using a Combination of Permutation Technique Followed by Encryption" expose également la permutation des pixels d'une image.

Résumé de l'invention

Il existe un besoin pour un mécanisme de génération de séquences de permutations pseudo-aléatoires amélioré, qui soit simple, compact, facile à réaliser et scalable.
Un mode de réalisation pallie tout ou partie des inconvénients des mécanismes connus de génération de séquences de permutations pseudo-aléatoires.
Un mode de réalisation prévoit une solution adaptée à des circuits basse consommation.
Un mode de réalisation prévoit une solution permettant une génération à la volée de la séquence de permutation.
Un mode de réalisation prévoit un procédé de génération d'une séquence de codes numériques pseudo-aléatoires permettant la réalisation d'une permutation d'un premier ensemble de valeurs en un deuxième ensemble de valeurs à partir desdits codes numériques représentatifs de positions de valeurs du premier ensemble dans le deuxième ensemble, comprenant les étapes suivantes :

générer, par itérations successives, une chaîne de nombres, dits nombres graines, à partir d'un nombre graine initial pseudo-aléatoire par application d'une première fonction d'un nombre graine au nombre graine suivant ;
appliquer une deuxième fonction à chaque nombre graine de la chaîne pour obtenir chaque code de position, la deuxième fonction comportant au moins une permutation suivie d'une fonction bijective.

Un mode de réalisation prévoit un procédé d'acquisition compressive d'images à partir d'un capteur d'image matriciel, comportant les étapes suivantes :

balayer séquentiellement des lignes du capteur d'image pour effectuer une lecture des informations par colonne, chaque colonne fournissant une tension et l'ensemble des tensions fournies par les colonnes définissant un premier ensemble de valeurs ;
soumettre l'ensemble des tensions fournies par les colonnes à une permutation pseudo-aléatoire pour fournir un deuxième ensemble de valeurs de tension,
la permutation étant effectuée à partir de codes numériques représentatifs de positions des valeurs du premier ensemble dans le deuxième ensemble, lesdits codes numériques étant obtenus par l'application des étapes suivantes :

générer, par itérations successives, une chaîne de nombres, dits nombres graines, à partir d'un nombre graine initial pseudo-aléatoire par application d'une première fonction d'un nombre graine au nombre graine suivant ; et

appliquer une deuxième fonction à chaque nombre graine de la chaîne pour obtenir chaque code de position, la deuxième fonction comportant au moins une permutation suivie d'une fonction bijective.

Selon un mode de réalisation, la première fonction est une fonction de génération itérative d'une permutation, le résultat de chaque itération étant appliqué en entrée de la deuxième fonction.

Selon un mode de réalisation, la première fonction est l'incrémentation d'un compteur de n bits initialisé par ledit nombre graine initial pseudo-aléatoire.

Selon un mode de réalisation, la première fonction et la deuxième fonction sont confondues en une seule, chaque code de position étant obtenu par application de ladite permutation suivie de ladite fonction bijective au code de position de rang précédent.

Selon un mode de réalisation, le procédé comporte en outre, à chaque itération, un test du code de position correspondant au résultat de la deuxième fonction au rang précédent pour détecter la présence d'un code ne comportant que des bits 0 ou comportant une valeur prédéterminée, incluant au moins un bit non nul et de préférence que des bits à 1.

Selon un mode de réalisation, en présence d'un code ne comportant que des bits 0, le nombre graine soumis à la permutation de rang courant est pris égal à ladite valeur prédéterminée.

Selon un mode de réalisation, en présence d'un code comportant ladite valeur prédéterminée, le nombre graine soumis à la permutation de rang courant est pris égal au code nul ne comportant que des bits 0.

Selon un mode de réalisation, ledit nombre graine initial pseudo-aléatoire est sélectionné aléatoirement.

Selon un mode de réalisation, ladite bijection est un code Gray.

Selon un mode de réalisation, chaque code de position est un mot de q bits, où q est égal au logarithme de base 2 du nombre de valeurs contenues dans chaque ensemble.

Selon un mode de réalisation, ladite permutation opère une permutation d'un nombre de bits de poids faible avec le même nombre de bits de poids fort, ce nombre de bits étant :

un pour un code de quatre ou quinze bits ;
deux pour un code de cinq, huit, neuf ou douze bits ;
trois pour un code de six bits ;
un ou deux pour un code de sept bits ;
quatre ou cinq pour un code de onze bits ;
deux ou cinq pour un code de treize bits ;
quatre pour un code de quatorze bits ;
sept pour un code de seize bits.

Un mode de réalisation prévoit un générateur d'une permutation d'un premier ensemble de valeurs en un deuxième ensemble de valeurs, comprenant, pour chaque valeur du deuxième ensemble, un circuit de sélection d'une valeur du premier ensemble en fonction d'un code numérique et comprenant un dispositif de génération d'une séquence de codes numériques pseudo-aléatoires mettant en œuvre un procédé de génération d'une séquence de codes numériques pseudo-aléatoires, la séquence de codes numériques pseudo-aléatoires générée par ledit dispositif de génération étant appliquée aux circuits de sélection.

Selon un mode de réalisation, chaque nombre graine de ladite chaîne de nombres graines est contenu dans un registre.

Selon un mode de réalisation, le générateur met en œuvre un procédé de génération dans lequel la première fonction est une fonction de génération itérative d'une permutation, le résultat de chaque itération étant appliqué en entrée de la deuxième fonction, et comprend, entre chacun desdits registres mémorisant les nombres graines, un circuit apte à réaliser la première fonction de génération itérative d'une permutation.

Selon un mode de réalisation, le dispositif de génération comprend, pour chaque circuit de sélection, un circuit de génération d'un code de position représentatif de la position de la valeur du premier ensemble à placer à la position courante du deuxième ensemble, ledit circuit de génération étant apte à exécuter la deuxième fonction à partir du nombre graine associé au rang de sélection courant.

Selon un mode de réalisation, chaque circuit de génération comporte un circuit câblé de permutation d'une partie seulement des bits du nombre soumis à la permutation.

Un mode de réalisation prévoit un circuit de traitement d'image par acquisition compressive, comportant au moins un générateur d'une permutation d'un premier ensemble de valeurs en un deuxième ensemble de valeurs.

Un mode de réalisation prévoit un capteur d'images à acquisition compressive comportant un générateur tel que décrit.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

[Fig. 1] figure 1 représente, de façon très schématique et sous forme de blocs, un exemple d'architecture de capteur d'image à acquisition compressive auquel s'appliquent, à titre d'exemple, les modes de réalisation décrits ;

[Fig. 2] la figure 2 représente, de façon très schématique, un exemple arbitraire illustrant le fonctionnement d'une permutation ;

[Fig. 3] la figure 3 représente, de façon très schématique et sous forme de blocs, un mode de réalisation d'un circuit de permutation pseudo-aléatoire ;

[Fig. 4] la figure 4 représente, de façon très schématique et sous forme de blocs, un autre mode de réalisation d'un circuit de permutation pseudo-aléatoire ;

[Fig. 5] la figure 5 représente, de façon très schématique et sous forme de blocs, un mode de réalisation d'un bloc de détection de valeur nulle du circuit de permutation pseudo-aléatoire de la figure 4 ;

[Fig. 6] la figure 6 représente, de façon très schématique et sous forme de blocs, un autre mode de réalisation d'un circuit de permutation pseudo-aléatoire ;

[Fig. 7] la figure 7 représente un exemple de réalisation d'un circuit de commutation commandable pour réaliser des permutations ;

[Fig. 8] la figure 8 est un schéma-bloc illustrant un mode de mise en oeuvre d'un procédé de génération de codes de position pour une permutation, basé sur le mode de réalisation de la figure 3 ; et

[Fig. 9] la figure 9 représente, de façon schématique, un mode de réalisation d'un circuit de génération, à la volée, de codes de permutation pour un vecteur de 256 valeurs, basé sur le mode de réalisation de la figure 4.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.
Par souci de clarté, seuls les étapes et éléments utiles à la compréhension des modes de réalisation décrits ont été représentés et sont détaillés. En particulier, la génération de la graine aléatoire à partir de laquelle sont calculés les coefficients de la permutation n'a pas été détaillée et toute graine usuelle peut être utilisée. De plus, bien que l'on fasse plus particulièrement référence à un exemple d'application à l'acquisition d'image, les modes de réalisation décrits s'appliquent plus généralement à toute génération de permutations pseudo-aléatoires.
Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.
Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.
Sauf précision contraire, les expressions "environ", "approximativement", "sensiblement", et "de l'ordre de" signifient à 10 % près, de préférence à 5 % près.

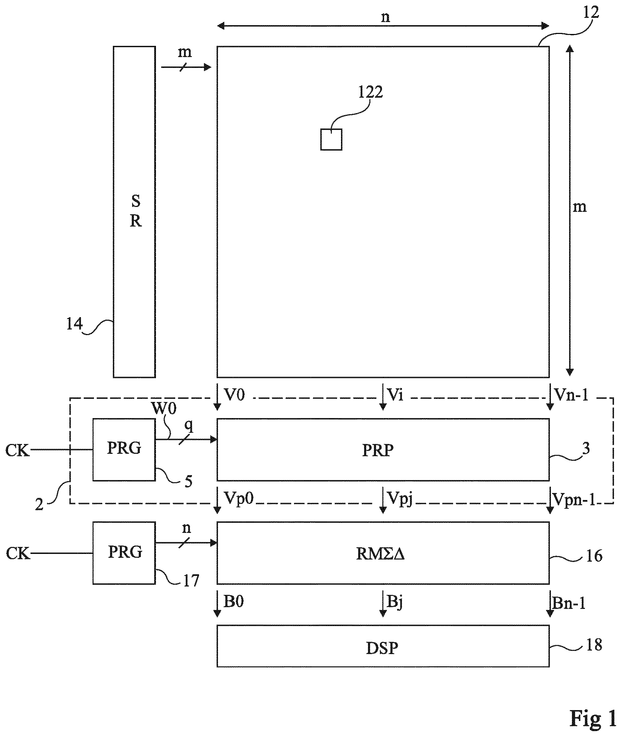

La figure 1 représente, de façon très schématique et sous forme de blocs, un exemple d'architecture de capteur d'image à acquisition compressive auquel s'appliquent, à titre d'exemple, les modes de réalisation décrits.
Les méthodes d'acquisition compressive permettent une acquisition et une compression simultanées de l'image en prévoyant, au lieu de lire et numériser une valeur de sortie représentative d'un niveau d'éclairement reçu par chaque pixel individuellement, d'effectuer une pluralité de mesures non-cohérentes basées chacune sur un support de mesure comportant plusieurs pixels du capteur, par exemple la totalité des pixels du capteur, ou un sous-ensemble de pixels du capteur. Chaque mesure est une somme pondérée des niveaux de luminosité reçus par les différents pixels d'un support de mesure. Les coefficients de pondération sont générés de façon aléatoire ou pseudo-aléatoire. Ces coefficients peuvent être binaires (0 ou 1), ce qui facilite la mise en oeuvre des opérations de sommation pondérée. Pour obtenir un effet de compression, le nombre total de mesures effectuées sur le capteur est inférieur au nombre total de pixels du capteur. Il est ainsi possible de réduire la durée d'acquisition de l'image et donc la consommation électrique liée à l'acquisition, notamment grâce au fait qu'une quantité moins importante de données est lue et numérisée par le capteur. En outre, les traitements de compression dans le domaine numérique, postérieurs à l'acquisition, peuvent être réduits ou supprimés en raison, par exemple, de la forte entropie des mesures générées par l'acquisition compressive.

L'image d'origine peut être reconstruite à partir de l'image compressée et de la matrice des coefficients de pondération utilisés lors de l'acquisition. Cette reconstruction exploite la parcimonie de l'image d'origine dans une base de décomposition particulière, par exemple dans une base en cosinus discrets ou dans une base d'ondelettes.

Les mesures compressées extraites par une acquisition compressive peuvent par exemple être utilisées directement pour des traitements de classification sans avoir besoin de reconstruire l'image d'origine, comme c'est le cas dans l'architecture présentée en figure 1.

Dans l'exemple de la figure 1, un capteur d'image matriciel, par exemple un capteur CMOS, comporte un réseau matriciel 12 de pixels 122 identiques. La matrice 12 comprend m (par exemple, 256 ou 512) lignes et n (par exemple 256 ou 512) colonnes. Les modes de réalisation décrits ci-après sont bien entendu compatibles avec des matrices de dimensions différentes.

Les pixels 122 du capteur peuvent être quelconques. Il s'agit, par exemple de pixels actifs, c'est-à-dire que chaque pixel comprend un photodétecteur et un amplificateur de sortie actif à base de transistors MOS. La prévision d'un capteur à pixels actifs présente notamment l'avantage de permettre l'acquisition d'images faiblement bruitées par rapport à un capteur à pixels passifs (c'est-à-dire un capteur dans lequel chaque pixel comprend un photodétecteur mais ne comprend pas son propre amplificateur de sortie).

Dans l'exemple de la figure 1, les lignes sont balayées séquentiellement sous commande d'un registre à décalage 14 (SR). La lecture des informations du capteur est effectuée par colonne, chaque colonne fournissant une tension Vj, avec j allant de 0 (V0) à n-1 (Vn-1). Les tensions Vj sont soumises à une permutation pseudo-aléatoire (PRP). Cette permutation est effectuée par un circuit 2 dont des modes de réalisation seront décrits par la suite. Le circuit 2 fournit n tensions Vpj (j allant de 0 à n-1) à un modulateur pseudo-aléatoire 16 de type sigma-delta (KMΣΔ) traitant les colonnes en parallèle et qui fournit séquentiellement des valeurs numériques binaires Bj (j allant de 0 à n-1) représentatives des niveaux des différentes colonnes à un processeur de traitement numérique 18 (DSP).

Le circuit 2 comporte un circuit 3 de commutateurs effectuant la permutation des colonnes. La permutation des colonnes de la ligne sélectionnée est effectuée par le circuit 3 sous commande d'un générateur 5 (PRG) d'un nombre pseudo-aléatoire et d'un signal de séquencement CK. Le générateur 5 fournit un nombre ou code pseudo-aléatoire W0 sur un nombre q de bits qui est fonction du nombre n de colonnes à permuter comme on le verra par la suite.

Le convertisseur 16 exploite également un code pseudo-aléatoire fourni par un générateur 17 (PRG) afin d'affecter un -1 (associé à un 0 logique) ou un 1 (associé à un 1 logique) à chaque information reçue du circuit 3 (c'est-à-dire multiplier par -1 ou par 1 chaque tension Vpj). Le générateur 17 fournit donc un code pseudo-aléatoire de n bits. Le générateur 17 est également séquencé par le signal CK.

Les n bits Bj générés par le circuit 16 sont traités par le processeur de traitement numérique 18 qui exploite les informations mesurées.

Une particularité de l'architecture de la figure 1 réside principalement dans le circuit 2 de permutation pseudo-aléatoire.

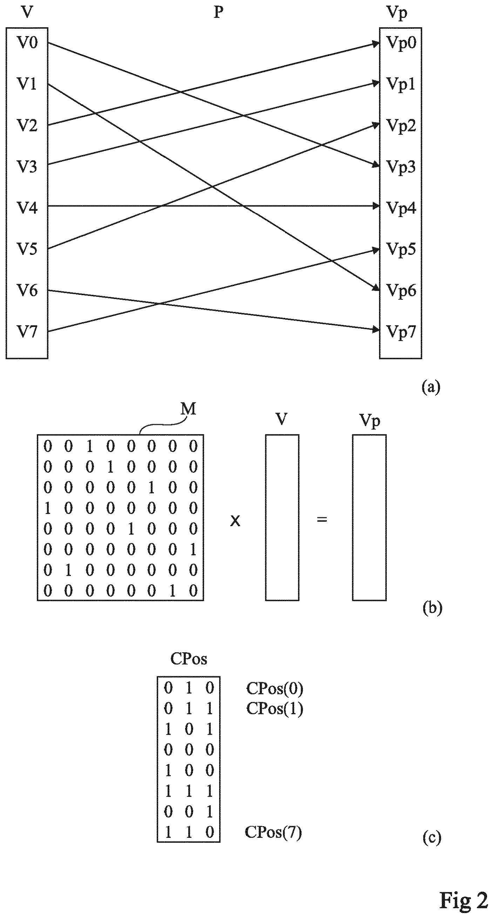

La figure 2 représente, de façon très schématique, un exemple arbitraire illustrant le fonctionnement d'une permutation.

La figure 2(a) représente deux vecteurs V ({V0, V1, V2, V3, V4, V5, V6, V7}) et Vp ({Vp0, Vp1, Vp2, Vp3, Vp4, Vp5, Vp6, Vp7}) de huit éléments chacun et illustre, par des flèches, une permutation P souhaitée entre ces deux vecteurs. Chaque flèche illustre, pour chaque élément du vecteur V, dans quel élément du vecteur Vp est transférée la valeur de l'élément du vecteur V.

La réalisation, par des moyens matériels ou logiciels d'une telle permutation peut être basées sur une matrice de permutation donnant la correspondance entre les éléments du vecteur V et ceux du vecteur Vp.

La figure 2(b) illustre le contenu d'une telle matrice de permutation M permettant de coder la permutation P de la figure 2(a). En d'autres termes, le vecteur Vp peut être obtenu en multipliant le vecteur V par la matrice M (M * V = Vp). On considère arbitrairement que les correspondances entre les éléments sont codées par des états "1". Dans l'exemple de la figure 2(b), les colonnes sont associées au vecteur V et les lignes sont associées au vecteur Vp. Ainsi, la première ligne indique le rang (2) de l'élément du vecteur V dont la valeur doit être placée dans l'élément Vp0 du vecteur Vp, c'est-à-dire la position de l'élément V2 dans l'exemple représenté. La deuxième ligne indique le rang (4) de l'élément du vecteur V dont la valeur doit être placée dans l'élément Vp1, et ainsi de suite. La matrice M est donc une matrice carrée de n colonnes et n lignes (ici, n = 8).

Toutefois, en pratique, le codage de la permutation s'effectue en indiquant, pour chaque élément du vecteur Vp de destination, le rang dans le vecteur V où aller chercher la valeur.

La figure 2(c) illustre un tel principe de codage d'une permutation. La matrice de permutation M de la figure 2(b) peut s'exprimer sous la forme d'un vecteur CPos de codes de position {CPos(0), CPos(1), ..., CPos(7)} dont chaque élément est affecté à un élément du vecteur Vp et contient le rang, dans le vecteur V, de la valeur à placer dans cet élément du vecteur Vp. La taille q des éléments du vecteur CPos dépend de la taille n des vecteurs V et Vp (n = 2^q ou q = Log(n)).

Si le fait de passer à des codes de position réduit la taille des données codant la permutation, le nombre de codes à stocker peut vite devenir important, ce qui engendre des contraintes en termes de taille de mémoire de stockage si plusieurs permutations doivent être au préalable stockées en mémoire.

Selon les modes de réalisation décrits, on prévoit un mécanisme de génération à la volée de séquences pseudo-aléatoires de codes de position. Cette génération se base sur la génération d'une chaine de nombres, dits nombres graines Wj, à partir d'une graine, ou nombre graine initiale W0 par l'application itérative d'une première fonction F1, puis par l'application d'une deuxième fonction F2 à chaque nombre pour générer les codes de la séquence.

Chaque nombre graine est exprimé avec un nombre de bits identique à celui utilisé pour chaque élément du vecteur CPos, c'est-à-dire sur q bits si CPos(j) est exprimé sur q bits.

La deuxième fonction appliquée à chaque nombre graine comprend au moins une opération de permutation suivie d'une fonction bijective. Ainsi, à partir d'un nombre graine Wj, on obtient un code CPos(j) égal à F2(Wj).

La première fonction F1 appliquée à chaque nombre graine Wj (j variant entre 0 et au plus n-2 ou n-1) permet de définir le nombre graine suivant Wj+1, ainsi Wj+1 = Fl(Wj). Différents exemples de fonction F1 sont décrits plus en détails ci-après. Dans un mode de réalisation, particulièrement compact, la fonction F1 correspond à la fonction F2, avec Wj = CPos(j-1).

Le nombre graine initiale W0 est un nombre pseudo-aléatoire pouvant être obtenu à partir d'un générateur de nombre pseudo-aléatoire, ou tout autre moyen.

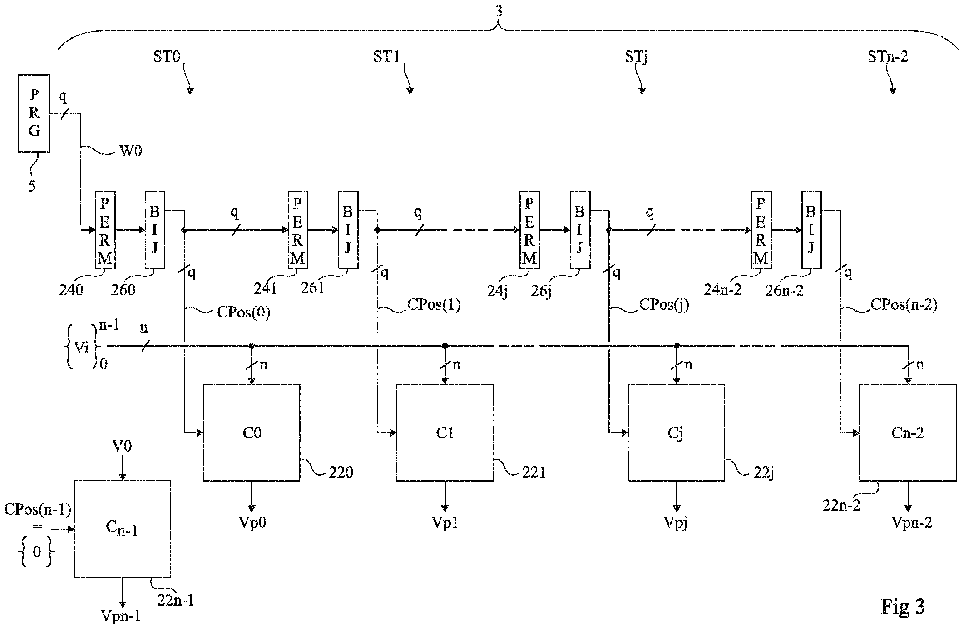

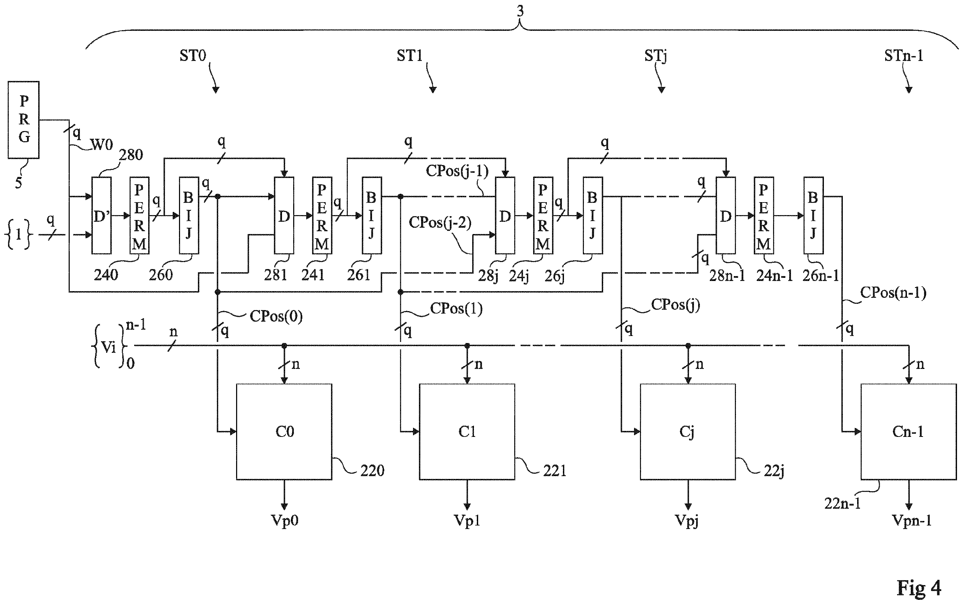

Les figures 3 et 4 représentent, de façon très schématique et sous forme de blocs, des modes de réalisation d'un circuit 2 (circuit 3 et générateur 5) permettant de générer une séquence pseudo-aléatoire de codes de position et d'appliquer ces codes à un circuit de commutation pour réaliser une permutation pseudo-aléatoire du vecteur V. Dans cet exemple la génération des codes est directement chaînée et F2=F1.

On reprend arbitrairement l'exemple de la figure 1 d'une permutation de n tensions Vi en n tensions Vpj. Toutefois, le circuit 2 décrit en relation avec la figure 2 s'applique plus généralement à la permutation de tout vecteur de valeurs d'entrée, V = {V0, ..., Vi, ..., Vn-1}, analogiques ou numériques, en un vecteur de valeurs de sortie Vp = {Vp0, ..., Vpj, ..., Vpn-1}.

Le circuit 3 illustré en figures 3 et 4 comporte n ou n-1 étages STj (ST0, ST1, ..., STn-1) de structure identique. Chaque étage comporte un circuit de commutation 22j (220, 221, ..., 22j, ..., 22n-1) ou Cj (C0, C1, ..., Cn-1) ayant pour rôle de sélectionner une (et une seule) des n valeurs V0, ..., Vi, ..., Vn-1 du vecteur V à affecter à la valeur Vpj, en fonction d'un code de position CPos(j) (CPos(0), CPos(1), ..., CPos(n-1)). Chaque code de position CPos(j) est un mot de q bits identifiant la position (le rang i) de la valeur Vi dans le vecteur V à sélectionner pour être fournie comme valeur Vpj. Le nombre q de bits des nombres CPos(j) dépend du nombre n de valeurs à permuter. Plus particulièrement q est tel que n = 2^n (2 puissance n), ou q = Log2(n).

L'ensemble ou vecteur CPos de codes de position {CPos(0), ..., CPos(i), ..., CPos(n-1)} est tel que chaque circuit de commutation 22j ne sélectionne qu'une valeur Vi et que chaque valeur Vi n'est sélectionnée qu'une seule fois parmi les n circuits 22j. Les n circuits de commutation 22j réalisent la permutation proprement dite. Chaque circuit 22j réalise un changement de position d'une valeur du vecteur V.

La génération des n codes de position CPos(j) doit donc être telle que chaque valeur Vj ne se retrouve qu'une seule fois dans le vecteur de sortie {Vp0, Vp1, ..., Vpj, ..., Vpn-1}. De plus, la permutation réalisée à partir de ces n codes est bijective.

Selon les modes de réalisation des figures 3 et 4, chaque code CPos(j) sur q bits est généré par l'application d'une fonction PERM (blocs 24j) au code CPos(j-1) de rang précédent suivi d'une fonction bijective BIJ (blocs 26j), par exemple un codage Gray. Le premier mot CPos(0) est par exemple, comme cela est représenté en figure 3, généré à partir du mot W0 aléatoire fourni par le générateur pseudo-aléatoire 5.

Dans la réalisation de la figure 3, et en particulier en cas d'utilisation d'un codage Gray pour la fonction bijective, la génération du nombre {0} (tous les bits à 0) par le tirage aléatoire PRG ne va engendrer que des codes identiques {0} dans la séquence. En effet, l'application d'un codage Gray au nombre {0} fournit le même nombre tout à 0. Par conséquent, dans le cas d'un code Gray, tous les codes de positions générés à la suite de l'apparition du nombre {0} vaudront {0}.

Ainsi, dans le mode de réalisation de la figure 3, avec une fonction bijective correspondant à un code de Gray, le code {0} est un code interdit et le générateur 5 utilisé doit être tel qu'il ne fournit pas de code {0}. Ainsi, dans cet exemple il est possible de générer uniquement n-1 valeurs de codes différentes. Ainsi, pour réaliser la transformation du vecteur V en VP, tous deux composées de n signaux, on réalise un câblage fixe d'un des bits, V0 étant dans cet exemple relié directement à Vpn-1. Autrement dit, les n-1 dernières valeurs du vecteur V subissent une permutation pseudo-aléatoire et la première valeur Vn-1 est toujours recopiée sur Vpn-1. En outre, contrairement au circuit de la figure 4, le circuit de la figure 3 comprend un bloc ST de moins (ici le bloc STn-1).

Pour éviter cette situation, et pouvoir obtenir n codes de position pseudo-aléatoires (et non pas n-1), on va chercher à utiliser le code {0}. Il faut néanmoins ajouter un dispositif au circuit pour éviter que ce code {0} ne se propage.

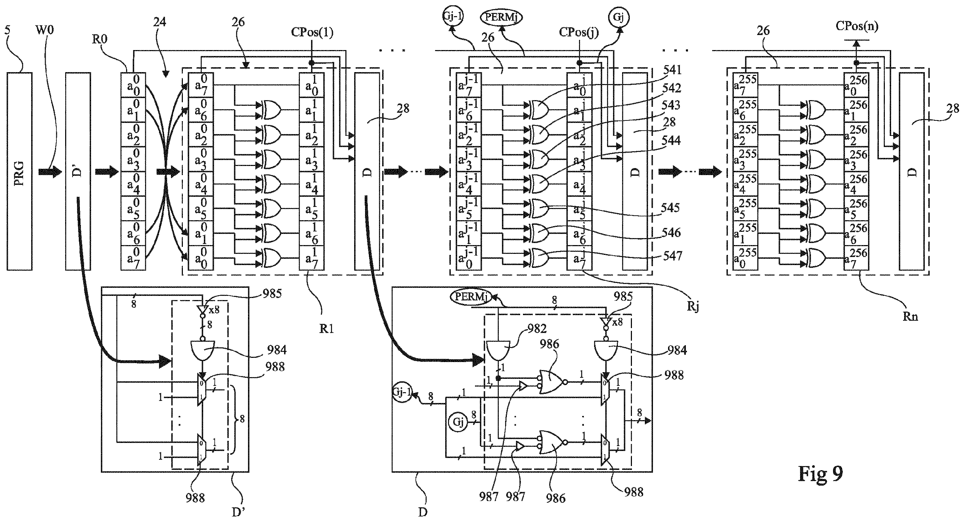

La figure 4 représente une variante du mode de réalisation de la figure 3, dans lequel la séquence de permutations générée inclut le nombre {0} et permet donc de générer n permutations. On utilise pour cela des circuits 28 pour détecter au moins le nombre {0} et le remplacer par un autre nombre. Dans l'exemple de la figure 4, on considère que chaque circuit 28j est en amont de la permutation 24j du même étage. Un autre exemple sera décrit ultérieurement en relation avec la figure 9 dans lequel chaque circuit 28j est en aval de la fonction bijective 26j du même étage. Cela ne change rien au fonctionnement comme on le verra en relation avec la figure 9.

Selon ce mode de réalisation, la fonction de permutation 24j ne reçoit pas directement le résultat de la fonction bijective 26j-1 de l'étage précédent (donc le code CPos(j-1)), mais la sortie d'une fonction (bloc 28j) de détection (D) au moins du nombre {0} et de sélection entre le résultat des fonctions bijectives 26j-1 et 26j-2 des deux étages précédents. Le bloc 280 (D') de l'étage ST0 est différent des autres blocs 28j et reçoit le mot W0 et une valeur déterminée arbitrairement et comportant au moins un bit à l'état 1, par exemple le mot {1} composé uniquement d'états 1. Le bloc 281 de l'étage ST1 reçoit la sortie de la fonction bijective 260 et l'entrée du bloc 280, donc le mot W0.

Le rôle de chaque bloc 28j est de détecter la présence du nombre {0} en sortie de la fonction bijective 26j-1 de l'étage précédent STj-1 (ou généré par le générateur 5 pour l'étage ST0) afin de le remplacer pour la génération du code CPos(j) courant, par le nombre de l'étage encore précédent STj-2. Ainsi, le nombre {0} est bien utilisé comme code de position pour l'étage STj-1, mais n'est pas chaînée afin de ne pas arrêter la séquence.

Par ailleurs, afin de garantir que le nombre {0} soit bien présent dans la séquence générée, chaque bloc 28j détecte en outre la présence d'une valeur prédéterminée non nulle, par exemple la valeur {1} (tous les bits à 1), en sortie de l'étage précédent STj-1, afin de le remplacer pour la génération du code CPos(j) courant, par le nombre {0}. Ainsi, le code CPos(j) prend la valeur {0} (la permutation 24 et le code Gray 26 appliqués à un mot tout à 0 donne le même mot). Toutefois, comme le code CPos(j) est {0}, le nombre sélectionné par le bloc 28j+1 de l'étage suivant STj+1 sera le nombre prédéterminé (dans cet exemple, 1) de l'étage STj-1. Ainsi, on a intercalé la valeur tout à 0 dans la séquence et on permet l'obtention d'une séquence de n valeurs.

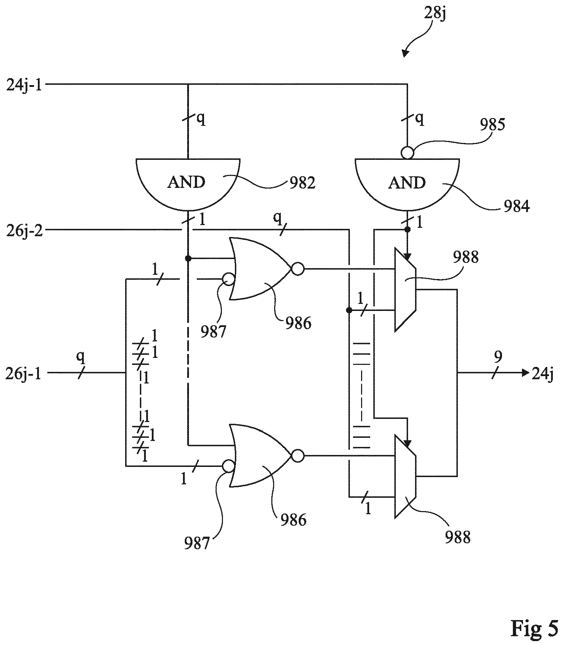

La figure 5 représente un mode de réalisation d'un bloc de détection et de sélection 28j (pour j compris entre 1 et n-1).

Le bloc 28j reçoit, en entrées, les sorties des blocs 24j-1, 26j-1 et 26j-2 et fournit en sortie le nombre à appliquer au bloc 24j.

Chaque bloc 28 comporte deux portes logiques 982 et 984 respectivement destinées à détecter la présence du mot prédéterminé (dans cet exemple le mot {1}) et du mot {0} en sortie du bloc 24j-1. La porte 982 est une porte ET (AND) combinant les q bits du mot fourni par le bloc 24j-1. La porte 984 est une porte ET (AND) combinant l'inverse (inverseur 985) des q bits du mot fourni par le bloc 24j-1.

La sortie de la porte 982 est combinée, par des portes NON-OU 986, avec l'inverse (inverseurs 987) de chacun des bits du mot CPos(j-1) fourni par le bloc 26j-1. Ainsi, si le bit de sortie de la porte 982 est 0, la sortie de chaque porte 986 fournit le bit correspondant du mot CPos(j-1). L'ensemble des portes 986 fournit donc le mot CPos(j-1). Si le bit de sortie de la porte 982 est 1 (c'est-à-dire que l'on est en présence du mot {1}), toutes les portes 986 fournissent un état 0. L'ensemble des portes 986 fournit donc le mot {0}.

La sortie de chaque porte 986 est envoyée en entrée d'un multiplexeur deux vers un 988, ou sélecteur, dont l'autre entrée reçoit le bit de rang correspondant du mot CPos(j-2) issu du bloc 26j-2 (ou le mot W0 pour le bloc 281). Les sorties des multiplexeurs 988 forment le mot de sortie du bloc 28j appliqué en entrée de la permutation 24j. Tous les multiplexeurs 988 sont commandés par la sortie de la porte 984 et sélectionnent leur première entrée en présence d'un état 0 en sortie de la porte 984. Ainsi, en présence du mot {0} en sortie du bloc 24j-1 (sortie de la porte 984 à l'état 1), le mot fourni en sortie du bloc 28j est le code CPos (j-2). En l'absence du mot {0} en sortie du bloc 24j-1 (sortie de la porte 984 à l'état 0) le mot fourni en sortie du bloc 28j est le mot fourni par les portes 986, donc soit le code CPos(j-1), soit le mot {0} selon que l'on est en présence ou non du mot {1} à l'étage STj-1.

En variante, certaines entrées de la porte 982 sont inversées pour définir une valeur prédéterminée différente du mot {1}.

Pour le premier bloc 280 (D'), la partie de détection du mot {1} est omise. En d'autres termes, seuls la porte 984 (et l'inverseur 985) et les multiplexeurs 988 sont présents. Les premières entrées des multiplexeurs reçoivent les bits du mot W0 et les deuxièmes entrées des multiplexeurs des états 1. Le détecteur 984-985) reçoit le mot W0. Ainsi, si le mot W0 vaut 0, le bloc 280 fournit le mot {1}. Dans le cas contraire, il fournit le mot W0.

Le mode de réalisation de la figure 5 n'est qu'un exemple et on pourra utiliser tout autre circuit remplissant la même fonction.

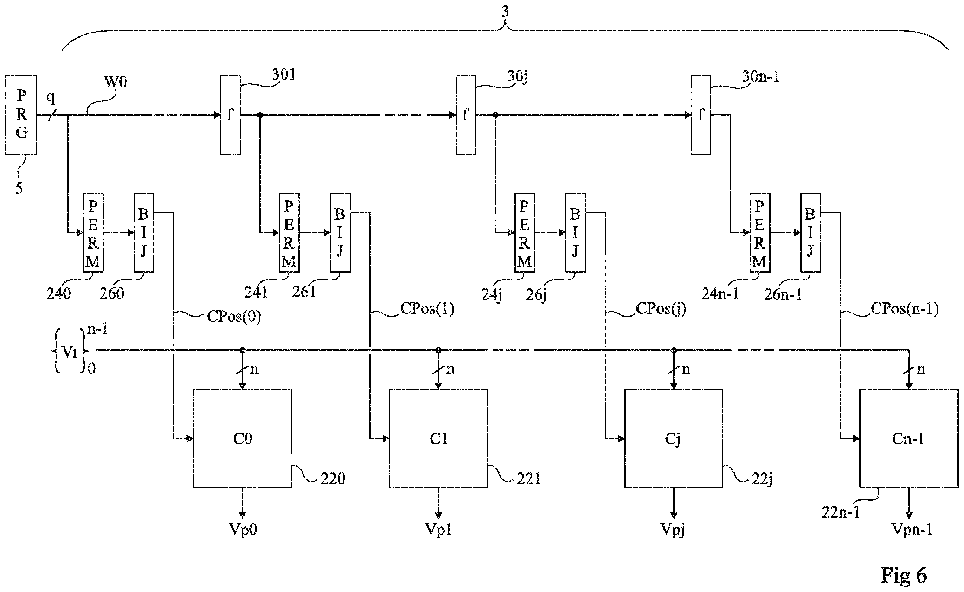

La figure 6 représente un autre mode de réalisation dans lequel les fonctions de permutation PERM et de bijection BIJ d'un étage courant STj ne sont pas appliquées au code de position précédent CPos(j-1). Selon ce mode de réalisation, le mot W0 est appliqué à une fonction f (bloc 30j) de génération itérative d'une permutation (correspondant à la fonction F1 susmentionnée). Le résultat de chaque itération de la fonction f est appliqué en entrée de la permutation 24j de rang correspondant. La fonction f est, par exemple, l'incrémentation d'un compteur de n bits initialisé par le nombre aléatoire W0.

Ainsi, la structure des circuits 3 est, quel que soit le mode de réalisation (figure 3, 4 ou 6), une structure dans laquelle les étages STj sont en quelque sorte chaînés, chaque étage STj étant lié à l'étage précédent STj-1 par le code de position CPos(j-1) ou par le nombre ayant servi à générer le code de position de cet étage précédent.

Un avantage d'une telle structure est qu'elle permet une génération des codes de position (donc de la matrice de permutation) à la volée.

Un avantage induit, par rapport à des réalisations usuelles, est qu'il n'est donc pas nécessaire de stocker la matrice de permutation, ce qui représente une économie en termes d'encombrement et de consommation.

Un autre avantage est la simplicité des opérations réalisées pour la génération des codes de position. En particulier, la structure proposée est compatible avec la réalisation de la fonction PERM par câblage et portes logiques.

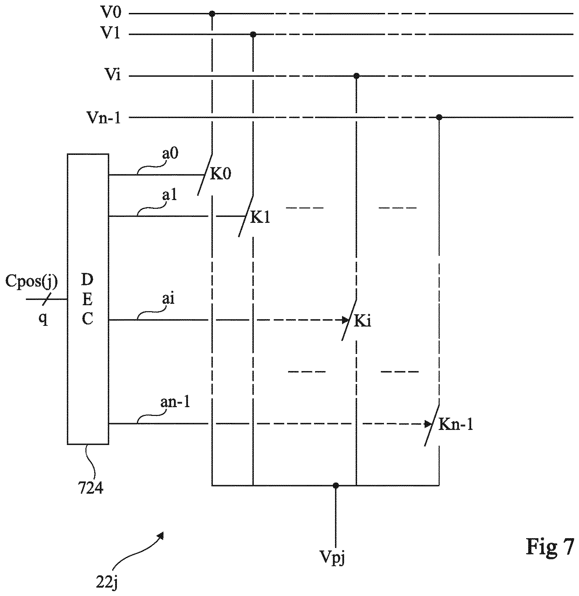

La figure 7 représente un exemple de réalisation d'un circuit de commutation commandable 22j de changement de position d'un élément du vecteur V.

Un tel circuit comporte n commutateurs Ki (K0, K1, ..., Kn-1). Chaque commutateur Kj relie l'entrée du circuit 3 recevant la valeur Vj (V0, V1, ..., Vn-1) à la sortie du circuit 22j fournissant la valeur VPj. Chaque commutateur Kj est commandé par un bit aj (a0, a1, ..., an-1) extrait, par un décodeur 724 (DEC) du code CPos(j) de rang j. Le rôle du décodeur 724 est d'interpréter le code CPos(j) dont la valeur est égale au rang i du commutateur Ki à fermer pour réaliser la permutation.

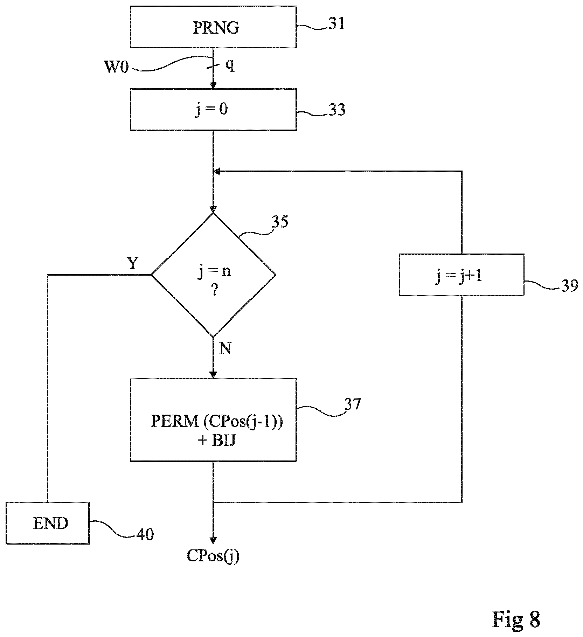

La figure 8 est un schéma-bloc illustrant un mode de mise en oeuvre d'un procédé de génération des codes CPos(j) de position pour une permutation d'après le mode de réalisation de la figure 3.

On commence par générer un nombre pseudo-aléatoire W0 sur q bits (bloc 31, PRNG).

On effectue ensuite un traitement en boucle sur toutes les valeurs j de 0 à n-1. Pour cela, on initialise un compteur j (bloc 33, j = 0). Tant que toutes les valeurs de j n'ont pas été traitées (sortie Y d'un bloc 35, j = n ?), on applique (bloc 37, PERM(CPos(j-1)) + BIJ) une permutation prédéfinie PERM des bits du mot pseudo-aléatoire de rang précédent CPos(j-1), suivie d'une fonction bijective BIJ (par exemple un codage Gray), afin d'obtenir le code de position CPos(j). Dans le cas initial, où j égal 0, le mot pseudo-aléatoire de rang précédent est pris égal au nombre pseudo-aléatoire W0.

A chaque itération, on génère de cette façon le code de position suivant CPos(j). Cette opération est répétée (incrémentation du rang j, bloc 39, j=j+1) tant qu'il reste des valeurs j à traiter. Une fois que tous les codes de position ont été traités (sortie Y du bloc 35), le procédé s'arrête (bloc 40, END) pour cette permutation.

La figure 9 représente, de façon schématique, un mode de réalisation d'un circuit de génération, à la volée, des codes de permutation CPos(j) de valeurs de 256 colonnes.

La représentation de la figure 9 illustre un exemple de contenus de registres Rj contenant les mots représentatifs des codes de position CPos(j). En d'autres termes, le contenu de chaque registre Rj identifie le rang i de la valeur Vi à fournir en tant que valeur VPj.

La figure 9 illustre, par rapport à la figure 4, une variante selon laquelle on considère que le bloc 28 de détection et de sélection de rang j est en sortie de l'étage correspondant, plutôt qu'en entrée. Cela ne modifie en rien le principe de fonctionnement. De plus, en figure 9, l'indice j va de 1 à n (au lieu de 0 à n-1 en figure 4). Dans l'exemple de la figure 9, on suppose que les n étages (1 à n) sont structurellement identiques mais on utilise un bloc D' en amont de l'étage ST1. Dans le mode de réalisation de la figure 4, l'étage ST0 est différent en ce qu'il contient le bloc D', mais on économise un bloc D dans l'étage n, inutilisé dans le mode de réalisation de la figure 9.

En figure 9, on note Gj le résultat de l'application du code Gray (bloc 26) au résultat, noté PERMj, de la permutation (bloc 24) appliquée en sortie du bloc 28 de l'étage de rang précédent. Pour simplifier, seule une permutation 24 a été représentée.

La figure 9 illustre également un mode de réalisation des blocs D' et D correspondant à la réalisation de la figure 5.

Dans l'exemple de la figure 9, on suppose une permutation entre 256 valeurs (n = 256) et les mots CPos(j) sont donc sur 8 bits (q = 8). Les bits des codes CPos(j) sont notés a(k, j), où k (compris entre 0 et q) désigne le rang du bit du code CPos(j) et où j désigne le rang de la valeur Vpj du vecteur de sortie {Vp1, ..., Vpj, ..., Vpn}. La notation a(k, j) est notée en figure 9 :

[Math 1]

$$a_k^j.$$

Le mot W0 fourni par le générateur 5 (PRG) est soumis au bloc D'.

Ainsi, le mot fourni par le bloc D' et contenu dans le registre R0 est :

[Math 2]

$$\{\, a_0^0, a_1^0, a_2^0, a_3^0, a_4^0, a_5^0, a_6^0, a_7^0 \}.$$

L'opération 24 (PERM) appliquée à un mot de rang j pour obtenir le mot de rang j+1 consiste à permuter les deux bits de poids fort avec les deux bits de poids faible.

Ainsi, appliqué au contenu du registre R0, on obtient :

[Math 3]

$$\{a_7^0, a_6^0, a_2^0, a_3^0, a_4^0, a_5^0, a_1^0, a_0^0\}$$

à l'issue de l'étape 24.

Plus généralement, le mot CPos(j) en sortie de permutation de rang j appliqué à la fonction bijective représente le résultat de l'application de la fonction D de rang j-1 et est noté :

[Math 3]

$$\{a_7^{j-1}, a_6^{j-1}, a_2^{j-1}, a_3^{j-1}, a_4^{j-1}, a_5^{j-1}, a_1^{j-1}, a_0^{j-1}\}.$$

L'étape 26 consiste à appliquer une bijection aux bits issus de la permutation PERM pour obtenir le mot CPos(j). Cette opération est, par exemple, l'application d'un code Gray, effectuée par un circuit logique à base de portes 54k (541, 542, 543, 544, 545, 546, 547) de type OU-Exclusif (avec k allant de 2 à q). Chaque porte 54k combine deux à deux les bits successifs du mot intermédiaire issus de l'étape 24 pour fournir le bit a(k, j), le bit a(0, j) étant simplement le résultat de l'étape 24, soit le contenu du bit a(7, j-1).

Ainsi, les bit a(k, j) du mot CPos(j) valent respectivement :

a(0, j) = a(7, j-1),
a(1, j) = le résultat de la combinaison OU-Exclusif du bit a(7, j-1) avec le bit a(6, j-1),
a(2, j) = le résultat de la combinaison OU-Exclusif du bit a(6, j-1) avec le bit a(2, j-1),
a(3, j) = le résultat de la combinaison OU-Exclusif du bit a(2, j-1) avec le bit a(3, j-1),
a(4, j) = le résultat de la combinaison OU-Exclusif du bit a(3, j-1) avec le bit a(4, j-1),
a(5, j) = le résultat de la combinaison OU-Exclusif du bit a(4, j-1) avec le bit a(5, j-1),
a(6, j) = le résultat de la combinaison OU-Exclusif du bit a(5, j-1) avec le bit a(1, j-1), et
a(7, j) = le résultat de la combinaison OU-Exclusif du bit a(1, j-1) avec le bit a(0, j-1).

La fonction de permutation 24 illustrée par la figure 9 peut être modifiée selon diverses variantes pourvu de respecter la condition que chaque mot CPos(j) identifie la position d'un état 1 dans une matrice de commutation 22j ou de permutation, et que cette position n'est présente qu'une seule fois parmi les n codes CPos(j).

Un avantage du mécanisme de génération de permutations pseudo-aléatoires décrit est qu'il est compatible avec une réalisation matérielle avec des connexions de sorties d'un registre à l'entrée d'un autre registre et des portes logiques.

Un autre avantage est que la cellule matérielle de réalisation de la permutation d'un rang est la même pour tous les rangs. Ainsi, dans des applications compatibles avec une génération au fur et à mesure des codes de position, le circuit de permutation peut ne comprendre qu'une seule cellule matérielle réutilisée en boucle.

Un avantage des modes de réalisation décrits est que la permutation est particulièrement simple à réaliser de façon matérielle par des circuits en logique câblée. Une telle réalisation est compatible avec des besoins de rapidité de génération des permutations lorsque celles-ci sont générées à la volée.

Le nombre de bits permutés, c'est-à-dire soumis à l'inversion de position de l'étape 24 dépend de la taille q des mots CPos(j), donc de la taille n des vecteurs de valeurs. Ce nombre doit être respecté afin de préserver la faisabilité d'une génération chaînée des codes de position et garantir une permutation des valeurs V en Vp.

Le tableau ci-dessous résume le nombre de bits (colonnes du tableau 1) de poids faible pouvant être permutés de position à l'étape 24 avec des bits de poids fort du mot, en fonction du nombre q de bits (lignes du tableau 1). Ce tableau a été établi empiriquement. Pour certaines valeurs de q, plusieurs nombres de bits peuvent être permutés.

[Tableau 1]

|    | 1 | 2 | 3 | 4 | 5 | 6 | 7 |
|----|---|---|---|---|---|---|---|
| 4  | X |   |   |   |   |   |   |
| 5  |   | X |   |   |   |   |   |
| 6  |   |   | X |   |   |   |   |
| 7  | X | X |   |   |   |   |   |
| 8  |   | X |   |   |   |   |   |
| 9  |   | X |   |   |   |   |   |
| 10 |   |   |   |   |   |   |   |
| 11 |   |   |   | X | X |   |   |
| 12 |   | X |   |   |   |   |   |
| 13 |   | X |   |   | X |   |   |
| 14 |   |   |   | X |   |   |   |
| 15 | X |   |   |   |   |   |   |
| 16 |   |   |   |   |   |   | X |

D'autres types de permutations sont envisageables en permutant d'autres bits que les bits de poids fort avec des bits de poids faible, en respectant le critère d'une permutation, à savoir que toutes les valeurs du vecteur d'entrée sont présentes dans le vecteur de sortie.

Un mécanisme de permutation pseudo-aléatoire tels que décrit ci-dessus a de multiples applications.

On peut l'utiliser non seulement dans des applications de traitement d'images, mais également dans des applications cryptographiques, de permutation dans le domaine temporel et, plus généralement, pour toute application où l'on souhaite générer à la volée des permutations pseudo-aléatoires d'un vecteur en un autre vecteur de même taille de façon simple, peu gourmande en surface et en énergie.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art. En particulier, le choix de l'opération de bijection pourra varier. Cela ne modifie pas le principe de chaînage des codes de position à partir d'une première valeur pour réaliser une permutation, les conditions exposées (nombre de bits de poids forts et faibles permutés) en fonction de la taille des codes restent valables pour garantir une permutation.

Enfin, la mise en oeuvre pratique des modes de réalisation et variantes décrits est à la portée de l'homme du métier à partir des indications fonctionnelles données ci-dessus.

**Revendications**

**1.** Procédé de génération, à la volée, d'une séquence de codes numériques pseudo-aléatoires, comportant les étapes suivantes :

générer un premier ensemble de valeurs à partir d'un premier ensemble de tensions (V) ;

générer, par itérations successives, une chaîne de nombres, dits nombres graines, à partir d'un nombre graine initial pseudo-aléatoire (W0) par application d'une première fonction (f ; 24, 26 ; 28, 24, 26) d'un nombre graine au nombre graine suivant ;

appliquer une deuxième fonction à chaque nombre graine de la chaîne pour obtenir un même nombre de codes de position (CPos(j)), la deuxième fonction comportant au moins une première permutation (PERM) suivie d'une fonction bijective (BIJ) et étant réalisée en logique câblée ;

générer un deuxième ensemble de tensions (Vp) à partir desdits codes numériques (CPos), lesdits codes représentant les positions (j) respectives des valeurs du premier ensemble de tensions dans le deuxième ensemble de tensions et permettant la réalisation, par un circuit de commutation (22), d'une deuxième permutation du premier ensemble de valeurs (Vi) de tensions dans le deuxième ensemble de valeurs (Vp) de tensions.

2. Procédé d'acquisition compressive d'images à partir d'un capteur d'image matriciel (12), comportant les étapes suivantes :

balayer séquentiellement des lignes du capteur d'image pour effectuer, à chaque ligne, une lecture en parallèle des informations par colonne, chaque colonne fournissant une tension (V) et l'ensemble des tensions fournies par les colonnes définissant un premier ensemble de valeurs ;

soumettre l'ensemble des tensions fournies par les colonnes à une permutation pseudo-aléatoire pour fournir un deuxième ensemble de valeurs de tension (Vp),

dans lequel la permutation pseudo-aléatoire est effectuée à partir de codes numériques (CPos) représentatifs de positions (j) des valeurs (Vi) du premier ensemble dans le deuxième ensemble, lesdits codes numériques étant obtenus par l'application des étapes suivantes :

générer, par itérations successives, une chaîne de nombres, dits nombres graines, à partir d'un nombre graine initial pseudo-aléatoire (W0) par application d'une première fonction (f ; 24, 26 ; 28, 24, 26) d'un nombre graine au nombre graine suivant ; et

appliquer une deuxième fonction à chaque nombre graine de la chaîne pour obtenir un même nombre de codes de position (CPos(j)), la deuxième fonction comportant au moins une première permutation (PERM) suivie d'une fonction bijective (BIJ), la permutation pseudo-aléatoire constituant une deuxième permutation.

3. Procédé selon la revendication 1 ou 2, dans lequel la première fonction est une fonction (f) de génération itérative de la première permutation, le résultat de chaque itération étant appliqué en entrée de la deuxième fonction (24, 26).

4. Procédé selon la revendication 3, dans lequel la première fonction (f) est l'incrémentation d'un compteur de n bits initialisé par ledit nombre graine initial pseudo-aléatoire (W0).

5. Procédé selon la revendication 1 ou 2, dans lequel la première fonction et la deuxième fonction sont confondues en une seule, chaque code de position (CPos(j)) étant obtenu par application de ladite première permutation suivie de ladite fonction bijective au code de position de rang précédent.

6. Procédé selon la revendication 5, comportant en outre, à chaque itération, un test du code de position (CPos(j)) correspondant au résultat de la deuxième fonction au rang précédent pour détecter la présence d'un code ne comportant que des bits 0 ou comportant une valeur prédéterminée, incluant au moins un bit non nul et de préférence que des bits à 1.

7. Procédé selon la revendication 6, dans lequel, en présence d'un code ne comportant que des bits 0, le nombre graine soumis à la permutation de rang courant (j) est pris égal à ladite valeur prédéterminée.

8. Procédé selon la revendication 6 ou 7, dans lequel, en présence d'un code comportant ladite valeur prédéterminée, le nombre graine soumis à la première permutation de rang courant (j) est pris égal au code nul ne comportant que des bits 0.

9. Procédé selon la revendication 5, dans lequel ledit nombre graine initial pseudo-aléatoire (W0) est sélectionné aléatoirement.

10. Procédé selon l'une quelconque des revendications 1 à 9, dans lequel ladite bijection est un code Gray.

11. Procédé selon l'une quelconque des revendications 1 à 10, dans lequel chaque code de position (CPos(j)) est un mot binaire de q bits, où q est égal au logarithme de base 2 du nombre (n) de valeurs contenues dans chaque ensemble (V, Vp).

12. Procédé selon la revendication 1, dans lequel chaque graine est codée sur le même nombre de bits que les codes de position.

13. Procédé selon l'une quelconque des revendication 1 à 11, dans lequel ladite première permutation (PERM) opère une permutation d'un nombre de bits de poids faible avec le même nombre de bits de poids fort, ce nombre de bits étant :

un pour un code (CPos) de quatre ou quinze bits ;
deux pour un code (CPos) de cinq, huit, neuf ou douze bits ;
trois pour un code (CPos) de six bits ;
un ou deux pour un code (CPos) de sept bits ;
quatre ou cinq pour un code (CPos) de onze bits ;
deux ou cinq pour un code (CPos) de treize bits ;
quatre pour un code (CPos) de quatorze bits ;
sept pour un code (CPos) de seize bits.

14. Générateur d'une permutation d'un premier ensemble de tensions (V) en un deuxième ensemble de valeurs (Vp) en un deuxième ensemble de tensions (Vp), comprenant, pour chaque valeur (Vpj) du deuxième ensemble, un circuit (22j) de sélection d'une valeur (Vi) du premier ensemble en fonction d'un code numérique (CPos(j-1)) et comprenant un dispositif de génération d'une séquence de codes numériques pseudo-aléatoires mettant en oeuvre un procédé de génération selon l'une des revendications 1 à 13, la séquence de codes numériques pseudo-aléatoires générée par ledit dispositif de génération étant appliquée aux circuits de sélection et ces codes représentant les positions (j) respectives des valeurs du premier ensemble de tensions dans le deuxième ensemble de tensions.

15. Générateur selon la revendication 14, dans lequel chaque nombre graine de ladite chaîne de nombres graines est contenu dans un registre.

16. Générateur selon la revendication 15, mettant en œuvre un procédé de génération selon la revendication 3, et comprenant, entre chacun desdits registres mémorisant les nombres graines, un circuit apte à réaliser la première fonction de génération itérative d'une permutation.

17. Générateur selon l'une quelconque des revendications 14 à 16, dans lequel le dispositif de génération comprend, pour chaque circuit de sélection (22j), un circuit de génération d'un code de position (CPos(j)) représentatif de la position de la valeur (V(i)) du premier ensemble à placer à la position courante du deuxième ensemble, ledit circuit de génération étant apte à exécuter la deuxième fonction à partir du nombre graine associé au rang de sélection courant.

18. Générateur selon la revendication 17, dans lequel chaque circuit de génération comporte un circuit câblé de permutation d'une partie seulement des bits du nombre soumis à la permutation.

19. Circuit de traitement d'image par acquisition compressive, comportant au moins un générateur selon l'une quelconque des revendications 14 à 18.

20. Capteur d'images à acquisition compressive comportant un générateur selon l'une quelconque des revendications 14 à 19.

**Patentansprüche**

1. Ein Verfahren zum fliegenden Erzeugen bzw. On-the-fly-Erzeugen einer Folge von pseudozufälligen digitalen Codes, das die folgenden Schritte aufweist:

Erzeugen eines ersten Satzes von Werten aus einem ersten Satz von Spannungen (V);
Erzeugen, durch aufeinanderfolgende Iterationen, einer Kette von Zahlen, die als Keimzahlen bzw. Seed-Zahlen bezeichnet werden, ausgehend von einer anfänglichen Pseudozufallskeimzahl (W0) durch Anwendung einer ersten Funktion (f; 24, 26; 28, 24, 26) von einer Keimzahl zur nächsten Keimzahl;
Anwenden einer zweiten Funktion auf jede Keimzahl in der Kette, um eine gleiche Anzahl von Positionscodes (CPos(j)) zu erhalten, wobei die zweite Funktion mindestens eine erste Permutation (PERM) gefolgt von einer bijektiven Funktion (BIJ) aufweist und in verdrahteter Logik ausgeführt wird;
Erzeugen eines zweiten Satzes von Spannungen (Vp) ausgehend von den digitalen Codes (CPos), wobei die Codes die jeweiligen Positionen (j) der Werte des ersten Satzes von Spannungen im zweiten Satz von Spannungen darstellen und die Durchführung einer zweiten Permutation des ersten Satzes von Spannungswerten (Vi) im zweiten Satz von Spannungswerten (Vp) durch einen Schaltkreis (22) ermöglichen.

2. Ein Verfahren zur kompressiven Bilderfassung von einem Array-Bildsensor (12), mit den Schritten:

sequentielles Abtasten von Zeilen des Bildsensors, um für jede Zeile ein paralleles Auslesen der Informationen pro Spalte durchzuführen, wobei jede Spalte eine Spannung (V) liefert und der Satz der von den Spalten gelieferten Spannungen einen ersten Satz von Werten definiert;
Unterwerfen des Satzes von Spannungen, die von den Spalten geliefert werden, einer Pseudo-Zufalls-Permutation, um einen zweiten Satz von Spannungswerten (Vp) zu liefern,
wobei die Pseudo-Zufalls-Permutation auf der Grundlage von digitalen Codes (CPos) durchgeführt wird, die für Positionen (j) der Werte (Vi) des ersten Satzes in dem zweiten Satz repräsentativ sind, wobei die digitalen Codes durch die Anwendung der folgenden Schritte erhalten werden:

Erzeugen, durch aufeinanderfolgende Iterationen, einer Kette von Zahlen, die Keimzahlen genannt werden, ausgehend von einer anfänglichen pseudozufälligen Keimzahl (W0) durch Anwendung einer ersten Funktion (f; 24, 26; 28, 24, 26) von einer Keimzahl zur nächsten Keimzahl; und
Anwenden einer zweiten Funktion auf jede Keimzahl in der Kette, um eine gleiche Anzahl von Positionscodes (CPos(j)) zu erhalten, wobei die zweite Funktion mindestens eine erste Permutation (PERM) gefolgt von einer bijektiven Funktion (BIJ) aufweist, wobei die Pseudo-Zufalls-Permutation eine zweite Permutation bildet.

3. Verfahren nach Anspruch 1 oder 2, wobei die erste Funktion eine Funktion (f) des iterativen Erzeugens der ersten Permutation ist, wobei das Ergebnis jeder Iteration auf den Eingang der zweiten Funktion (24, 26) angewendet wird.

4. Verfahren nach Anspruch 3, wobei die erste Funktion (f) das Inkrementieren eines n-Bit-Zählers ist, der durch die anfängliche pseudozufällige Keimzahl (W0) initialisiert wird.

5. Verfahren nach Anspruch 1 oder 2, wobei die erste Funktion und die zweite Funktion ein und dieselbe sind, wobei jeder Positionscode (CPos(j)) durch Anwendung der ersten Permutation, gefolgt von der bijektiven Funktion, auf den Positionscode des vorherigen Ranges erhalten wird.

6. Verfahren nach Anspruch 5, das außerdem bei jeder Iteration einen Test des Positionscodes (CPos(j)) aufweist, der dem Ergebnis der zweiten Funktion im vorhergehenden Rang entspricht, um das Vorhandensein eines Codes festzustellen, der nur Bits 0 oder einen vorbestimmten Wert aufweist, einschließlich mindestens eines Bits ungleich Null und vorzugsweise nur Bits bei 1.

7. Verfahren nach Anspruch 6, wobei, bei Vorhandensein eines Codes, der nur Bits 0 enthält, die der Permutation des aktuellen Rangs (j) unterworfene Keimzahl als gleich dem vorbestimmten Wert angenommen wird.

8. Verfahren nach Anspruch 6 oder 7, wobei bei Vorhandensein eines Codes, der den vorbestimmten Wert enthält, die Keimzahl, die der ersten Permutation des aktuellen Rangs (j) unterzogen wird, als gleich dem Nullcode, der nur Bits 0 enthält, angesehen wird.

9. Verfahren nach Anspruch 5, wobei die anfängliche pseudozufällige Keimzahl (W0) zufällig ausgewählt wird.

10. Verfahren nach einem der Ansprüche 1 bis 9, wobei die Bijektion ein Gray-Code ist.

11. Verfahren nach einem der Ansprüche 1 bis 10, wobei jeder Positionscode (CPos(j)) ein binäres q-Bit-Wort ist, wobei q gleich dem Logarithmus zur Basis 2 der Anzahl (n) der in jedem Satz (V, Vp) enthaltenen Werte ist.

12. Verfahren nach Anspruch 1, wobei jeder Seed bzw. Keim über die gleiche Anzahl von Bits codiert ist wie die Positionscodes.

13. Verfahren nach einem der Ansprüche 1 bis 11, wobei die erste Permutation (PERM) eine Permutation einer Anzahl von niedrigstwertigen Bits mit der gleichen Anzahl von höchstwertigen Bits durchführt, wobei diese Anzahl von Bits beträgt:

eins für einen Vier- oder Fünfzehn-Bit-Code (CPos);
zwei für einen Fünf-, Acht-, Neun- oder Zwölf-Bit-Code (CPos);
drei für einen Sechs-Bit-Code (CPos);
ein oder zwei für einen Sieben-Bit-Code (CPos);
vier oder fünf für einen Elf-Bit-Code (CPos);
zwei oder fünf für einen Dreizehn-Bit-Code (CPos);
vier für einen Vierzehn-Bit-Code (CPos);
vier für einen Vierzehn-Bit-Code (CPos);
sieben für einen Sechzehn-Bit-Code (CPos).

14. Ein Generator einer Permutation eines ersten Satzes von Spannungen (V) in einen zweiten Satz von Werten (Vp), der für jeden Wert (Vpj) des zweiten Satzes eine Schaltung (22j) zur Auswahl eines Wertes (Vi) des ersten Satzes gemäß einem digitalen Code (CPos(j 1)) aufweist und eine Einrichtung zum Erzeugen einer Folge von pseudozufälligen digitalen Codes aufweist, die ein Erzeugungsverfahren nach einem der Ansprüche 1 bis 13 implementiert, wobei die von der Erzeugungseinrichtung erzeugte Folge von pseudozufälligen digitalen Codes an die Auswahlschaltungen angelegt wird und diese Codes die jeweiligen Positionen (j) der Werte des ersten Satzes von Spannungen in dem zweiten Satz von Spannungen darstellen.

15. Generator nach Anspruch 14, wobei jede Keimzahl der Kette von Keimzahlen in einem Register enthalten ist.

16. Generator nach Anspruch 15, der ein Erzeugungsverfahren nach Anspruch 3 implementiert und zwischen jedem der Register, die die Keimzahlen speichern, eine Schaltung aufweist, die die erste Funktion des iterativen Erzeugens einer Permutation ausführen kann.

17. Generator nach einem der Ansprüche 14 bis 16, wobei die Erzeugungseinrichtung für jede Auswahlschaltung (22j) eine Schaltung zum Erzeugen eines Positionscodes (CPos(j)) aufweist, der für die Position des Wertes (V(i)) des ersten Satzes repräsentativ ist, der in die aktuelle Position des zweiten Satzes gesetzt werden soll, wobei die Erzeugungsschaltung in der Lage ist, die zweite Funktion auf der Grundlage der Keimzahl auszuführen, die dem aktuellen Auswahlrang zugeordnet ist.

18. Generator nach Anspruch 17, wobei jede Erzeugungsschaltung eine verdrahtete Permutationsschaltung nur für einen Teil der der Permutation unterzogenen Bits aufweist.

19. Schaltung zur Bildverarbeitung mit kompressiver Abtastung, die mindestens einen Generator nach einem der Ansprüche 14 bis 18 aufweist.

20. Bildsensor mit kompressiver Abtastung, der einen Generator nach einem der Ansprüche 14 bis 19 enthält.

**Claims**

1. Method of on-the-fly generation of a sequence of pseudo-random digital codes, comprising the steps of:

generating a first set of values from a first set of voltages (V);
generating, by successive iterations, a chain of numbers, called seed numbers, from an initial pseudo-random seed number (W0) by application of a first function (f; 24, 26; 28, 24, 26) from one seed number to the next seed number;
applying a second function to each seed number in the chain to obtain a same number of position codes (CPos(j)), the second function comprising at least a first permutation (PERM) followed by a bijective function (BIJ) and being performed in wired logic;
generating a second set of voltages (Vp) from said digital codes (CPos), said codes representing the respective positions (j) of the values of the first set of voltages in the second set of voltages and enabling the performing, by a switching circuit (22), of a second permutation of the first set of voltage values (Vi) in the second set of voltage values (Vp).

2. Method of compressive image acquisition from an array image sensor (12), comprising the steps of:

sequentially scanning rows of the image sensor to perform, for each row, a parallel reading of the information per column, each column delivering a voltage (V) and the set of voltages delivered by the columns defining a first set of values;
submitting the set of voltages delivered by the columns to a pseudo-random permutation to deliver a second set of voltage values (Vp),
wherein the pseudo-random permutation is performed based on digital codes (CPos) representative of positions (j) of the values (Vi) of the first set in the second set, said digital codes being obtained by the application of the steps of:

generating, by successive iterations, a chain of numbers, called seed numbers, from an initial pseudo-random seed number (W0) by application of a first function (f; 24, 26; 28, 24, 26) from one seed number to the next seed number; and
applying a second function to each seed number in the chain to obtain a same number of position codes (CPos(j)), the second function comprising at least a first permutation (PERM) followed by a bijective function (BIJ), the pseudo-random permutation forming a second permutation.

3. Method according to claim 1 or 2, wherein the first function is a function (f) of iterative generation of the first permutation, the result of each iteration being applied to the input of the second function (24, 26).

4. Method according to claim 3, wherein the first function (f) is the incrementation of an n-bit counter initialized by said initial pseudo-random seed number (W0).

5. Method according to claim 1 or 2, wherein the first function and the second function are one and the same, each position code (CPos(j)) being obtained by application of said first permutation followed by said bijective function to the position code of previous rank.

6. Method according to claim 5, further comprising, at each iteration, a test of the position code (CPos(j)) corresponding to the result of the second function at the previous rank to detect the presence of a code only comprising bits 0 or comprising a predetermined value, including at least one non-zero bit and preferably only bits at 1.

7. Method according to claim 6, wherein, in the presence of a code only comprising bits 0, the seed number submitted to the permutation of current rank (j) is taken as equal to said predetermined value.

8. Method according to claim 6 or 7, wherein, in the presence of a code comprising said predetermined value, the seed number submitted to the first permutation of current rank (j) is taken as equal to the null code only comprising bits 0.

9. Method according to claim 5, wherein said initial pseudo-random seed number (W0) is randomly selected.

10. Method according to any of claims 1 to 9, wherein said bijection is a Gray code.

11. Method according to any of claims 1 to 10, wherein each position code (CPos(j)) is a binary q-bit word, where q is equal to the base-2 logarithm of the number (n) of values contained in each set (V, Vp).

12. Method according to claim 1, wherein each seed is coded over the same number of bits as the position codes.

13. Method according to any of claims 1 to 11, wherein said first permutation (PERM) performs a permutation of a number of least significant bits with the same number of most significant bits, this number of bits being:

one for a four- or fifteen bit-code (CPOs);
two for a five-, eight-, nine-, or twelve-bit code (CPos);
three for a six-bit code (CPos);
one or two for a seven-bit code (CPos);
four or five for an eleven-bit code (CPos);

two or five for a thirteen-bit code (CPos);
four for a fourteen-bit code (CPos);
seven for a sixteen-bit code (CPos).

14. Generator of a permutation of a first set of voltages (V) into a second set of values (Vp) into a second set of voltages (Vp), comprising, for each value (Vpj) of the second set, a circuit (22j) for selecting a value (Vi) of the first set according to a digital code (CPos(j-1)) and comprising a device for generating a sequence of pseudo-random digital codes implementing a generation method according to any of claims 1 to 13, the sequence of pseudo-random digital codes generated by said generation device being applied to the selection circuits and these codes representing the respective positions (j) of the values of the first set of voltages in the second set of voltages.

15. Generator according to claim 14, wherein each seed number of said chain of seed numbers is contained in a register.

16. Generator according to claim 15, implementing a generation method according to claim 3, and comprising, between each of said registers storing the seed numbers, a circuit capable of carrying out the first function of iterative generation of a permutation.

17. Generator according to any of claims 14 to 16, wherein the generation device comprises, for each selection circuit (22j), a circuit for generating a position code (CPos(j)) representative of the position of the value (V(i)) of the first set to be placed in the current position of the second set, said generation circuit being capable of executing the second function based on the seed number associated with the current selection rank.

18. Generator according to claim 17, wherein each generation circuit comprises a wired circuit of permutation of a portion only of the bits submitted to the permutation.

19. Circuit of compressive sensing image processing, comprising at last one generator according to any of claims 14 to 18.

20. Compressive sensing image sensor comprising a generator according to any of claims 14 to 19.

Fig 1

V          P          Vp

V0
V1
V2
V3
V4
V5
V6
V7

Vp0
Vp1
Vp2
Vp3
Vp4
Vp5
Vp6
Vp7

(a)

$$
\begin{matrix}
\overset{\displaystyle M}{} \\
\begin{bmatrix}
0 & 0 & 1 & 0 & 0 & 0 & 0 & 0 \\
0 & 0 & 0 & 1 & 0 & 0 & 0 & 0 \\
0 & 0 & 0 & 0 & 0 & 1 & 0 & 0 \\
1 & 0 & 0 & 0 & 0 & 0 & 0 & 0 \\
0 & 0 & 0 & 0 & 1 & 0 & 0 & 0 \\
0 & 0 & 0 & 0 & 0 & 0 & 0 & 1 \\
0 & 1 & 0 & 0 & 0 & 0 & 0 & 0 \\
0 & 0 & 0 & 0 & 0 & 0 & 1 & 0
\end{bmatrix}
\end{matrix}
\quad X \quad
\begin{matrix} V \\ {} \end{matrix}
\quad = \quad
\begin{matrix} Vp \\ {} \end{matrix}
$$

(b)

CPos

$$
\begin{bmatrix}
0 & 1 & 0 \\
0 & 1 & 1 \\
1 & 0 & 1 \\
0 & 0 & 0 \\
1 & 0 & 0 \\
1 & 1 & 1 \\
0 & 0 & 1 \\
1 & 1 & 0
\end{bmatrix}
\quad
\begin{matrix}
\text{CPos(0)} \\
\text{CPos(1)} \\
\\ \\ \\ \\ \\
\text{CPos(7)}
\end{matrix}
$$

(c)

**Fig 2**

Fig 3

Fig 4

EP 3 830 814 B1

Fig 5

Fig 6

EP 3 830 814 B1

Fig 7

Fig 8

Fig 9

EP 3 830 814 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006120619 A

**Littérature non-brevet citée dans la description**

- **M. FRANÇOIS et al.** *Pseudo-random number generator based on mixing of three chaotic maps*
- **S. MANICCAM et al.** *Image and video encryption using SCAN patterns*
- **M. YOUNES et al.** *An Image Encryption Approach Using a Combination of Permutation Technique Followed by Encryption*